**Europäisches Patentamt**

(19) **European Patent Office**

**Office européen des brevets**

(11) Numéro de publication: **0 238 764**
**A1**

## (12) DEMANDE DE BREVET EUROPEEN

(21) Numéro de dépôt: **86401885.8**

(22) Date de dépôt: **27.08.86**

(51) Int. Cl.⁴: **B 65 C 9/14,** B 29 C 49/24,
B 29 C 51/16, B 29 C 45/14,
B 29 C 31/00

(30) Priorité: **24.03.86 FR 8604182**

(71) Demandeur: **Dromigny, Pierre, 54, avenue de Versailles,
F-75016 Paris (FR)**

(43) Date de publication de la demande: **30.09.87**
**Bulletin 87/40**

(72) Inventeur: **Dromigny, Pierre, 54, avenue de Versailles,
F-75016 Paris (FR)**

(84) Etats contractants désignés: **AT BE CH DE GB IT LI LU
NL SE**

(74) Mandataire: **Bonnetat, Christian et al, Cabinet PROPI
Conseils 23 rue de Léningrad, F-75008 Paris (FR)**

(54) **Dispositif de transport d'une pellicule de format déterminé.**

(57) La présente invention concerne un dispositiv de transport d'une pellicule de format déterminé entre une position de prélèvement dans un magasin et une position de travail entre deux pièces, mobiles l'une par rapport à l'autre suivant une première direction, d'une machine.

Selon l'invention, il comporte des moyens de prélèvement (6) d'une pellicule (2) dans ledit magasin (3) susceptibles de se déplacer, selon un mouvement lié à celui desdites pièces (4, 5), suivant une seconde direction (Y–Y') orthogonale à ladite première direction (X–X') entre ladite position de prélèvement et ladite position de travail, et des moyens d'entraînement (18) sont associés audit magasin (3) pour animer ce dernier, indépendamment desdites pièces (4, 5) mais en synchronisme avec celles-ci, d'un mouvement alternatif parallèle à ladite première direction (X–X').

L'invention s'applique au transport d'une pellicule de format déterminé.

## Dispositif de transport d'une pellicule de format déterminé.

La présente invention concerne un dispositif de transport d'une pellicule de format déterminé, destinée par exemple à servir de revêtement au moins partiel d'un objet moulé, entre une position de prélèvement dans un magasin contenant une pluralité desdites pellicules et une position de travail entre deux pièces, mobiles l'une par rapport à l'autre suivant une première direction, d'une machine, telle que par exemple un moule.

On connaît déjà différents dispositifs utilisés dans le but indiqué ci-dessus. En général, de tels dispositifs comportent des moyens aptes à prélever, notamment par dépression, une pellicule dans le magasin et à l'amener entre les deux pièces, mobiles l'une par rapport à l'autre, de la machine. Or, dans de tels dispositifs connus, lesdits moyens de prélèvement doivent effectuer, indépendamment desdites pièces mais en synchronisme avec celles-ci, des mouvements relativement complexes, que ce soit pour prélever la pellicule ou pour l'amener en position de travail. En outre, il arrive que lesdits moyens prélèvent, en une seule fois, plus d'une pellicule, ce qui entraîne bien évidemment une augmentation des coûts de production et peut nuire de plus au bon fonctionnement de la machine.

La présente invention a pour but d'éviter ces inconvénients, et concerne un dispositif de transport d'une pellicule adapté pour permettre, de façon simple, le prélèvement et le transfert à une position de travail de la pellicule, tout en assurant le déramage des pellicules contenues dans le magasin.

A cet effet, le dispositif de transport est remarquable, selon l'invention, en ce qu'il comporte des moyens de prélèvement d'une pellicule dans ledit magasin susceptibles de se déplacer, selon un mouvement lié à celui desdites pièces, suivant une seconde direction orthogonale à ladite première direction entre ladite position de prélèvement et ladite position de travail, et en ce que des moyens d'entraînement sont associés audit magasin pour animer ce dernier, indépendamment desdites pièces mais en synchronisme avec celles-ci, d'un mouvement alternatif parallèle à ladite première direction, de façon à amener la pellicule extrême contenue dans ledit magasin au contact desdits moyens de prélèvement et, grâce également au mouvement alternatif du magasin, à déramer lesdites pellicules.

Selon une autre caractéristique de l'invention, les moyens de prélèvement sont entraînés par un système de deux crémaillères croisées engrenées l'une avec l'autre, dont l'une, parallèle à ladite première direction, est solidaire d'une première pièce de ladite machine et l'autre, parallèle à ladite seconde direction et qui peut coulisser dans un guide solidaire de la seconde pièce de la machine, est solidaire desdits moyens de prélèvement.

Avantageusement, les moyens de prélèvement comportent au moins une buse de dépression.

De plus, il est avantageux que les moyens d'entraînement du magasin, monté sur un support mobile, comprennent au moins un vérin, et que les moyens de prélèvement soient associés à des moyens permettant de les déplacer selon la première direction de façon à pouvoir déposer la pellicule exactement au fond de la cavité du moule.

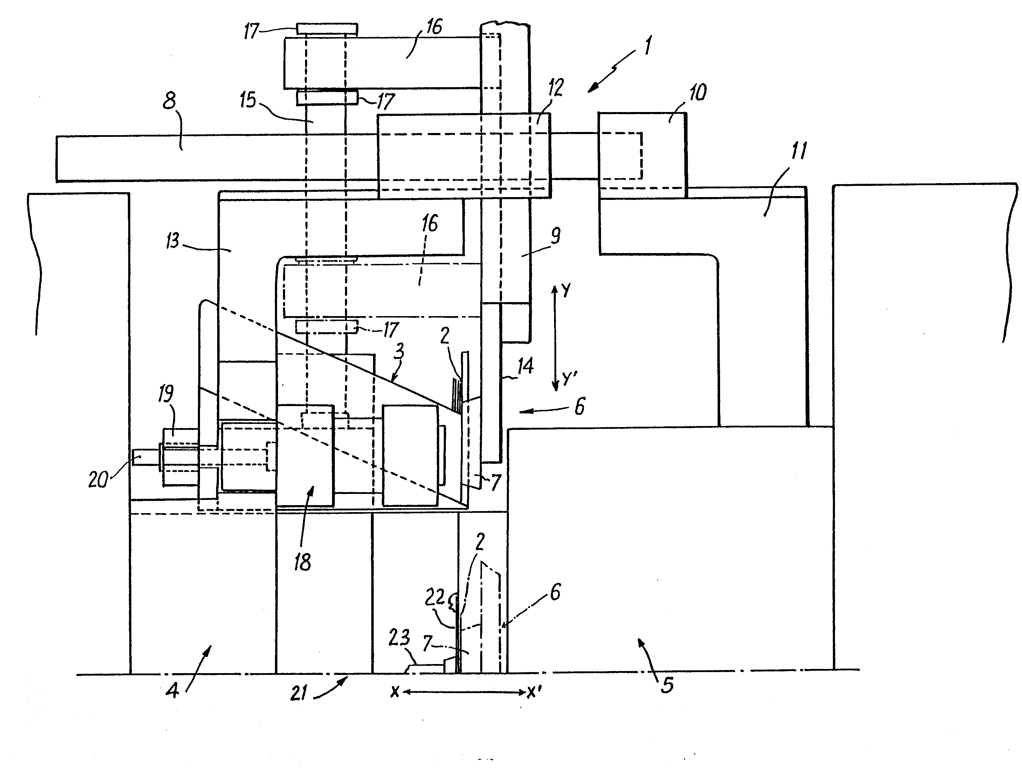

La figure unique du dessin annexé fera bien comprendre comment l'invention peut être réalisée.

Cette figure représente schématiquement un dispositif de transport, selon l'invention, associé à un moule.

Le dispositif 1, selon l'invention, est destiné à transporter une pellicule 2 de format déterminé, destinée, dans cet exemple de réalisation, à servir de revêtement au moins partiel d'un objet moulé (ce peut être, par exemple, une étiquette sur le couvercle d'une barquette), entre une position de prélèvement dans un magasin 3 contenant une pluralité desdites pellicules 2 et une position de travail entre deux pièces 4,5, mobiles l'une par rapport à l'autre suivant une première direction X-X', du moule 21. On peut considérer, par exemple, que la pièce 4 est mobile, tandis que la pièce 5 est fixe.

Le dispositif 1 comporte des moyens de prélèvement 6 d'une pellicule 2 dans le magasin 3 susceptibles de se déplacer, selon un mouvement lié à celui des pièces 4,5, suivant une seconde direction Y-Y' orthogonale à la première direction X-X' entre la position de prélèvement et la position de travail. On notera que, sur le dessin, les moyens de prélèvement sont représentés, partiellement, en traits mixtes dans ladite position de travail, le moule étant alors ouvert ; alors que, dans la position de prélèvement proprement dite, représentée en traits pleins, le moule est fermé.

Plus précisément, les moyens de prélèvement 6, comportant au moins une buse de dépression 7, sont entraînés par un système de crémaillères 8,9 croisées engrenées l'une avec l'autre, dont l'une 8, parallèle à la première direction

X-X', est solidaire, par l'intermédiaire d'un support 10 et d'une semelle 11 d'une première pièce 5 du moule, et dont l'autre 9, parallèle à la seconde direction Y-Y' et qui peut coulisser, ainsi que la crémaillère 8, dans un guide 12 solidaire, par l'intermédiaire d'une semelle 13, de la seconde pièce 4 du moule, est solidaire, par l'intermédiaire d'un support 14, de la buse de dépression 7.

Le support 14 est relié à deux colonnes de guidage (une seule colonne 15 étant visible sur le dessin), chacune par l'intermédiaire d'une traverse 16 dont l'extrémité libre est traversée par la colonne 15 correspondante.

Des douilles à billes 17, montées sur la colonne 15 correspondante, sont prévues de part et d'autre de la traverse 16.

L'ensemble traverse 16 plus douilles 17 peut coulisser le long de la colonne 15 dans une direction parallèle à la direction Y-Y' entre une position (en traits pleins) correspondant à ladite position de prélèvement et une position (en traits mixtes) correspondant à ladite position de travail.

De plus, des moyens d'entraînement, tels qu'un vérin 18, sont associés au magasin 3, monté sur un support mobile 19, pour animer ce dernier, indépendamment des pièces 4,5 mais en synchronisme avec celles-ci, d'un mouvement alternatif parallèle à la première direction X-X'. Ce mouvement alternatif du magasin 3 permet d'amener la pellicule extrême 2 contenue dans le magasin au contact de la buse de dépression 7 et également de déramer les pellicules contenues dans le magasin. Deux colonnes de guidage parallèles à la direction X-X' (une seule colonne 20 étant visible sur le dessin) sont également prévues.

On peut prévoir un vérin ou analogue (non représenté) pour déplacer, suivant l'axe X-X', la buse de dépression 7 de façon à pouvoir déposer la pellicule 2 exactement au fond de la cavité 22 du moule. La buse 7 lâche alors la pellicule qui est reprise par la buse 23, laquelle maintient ladite pellicule au fond de la cavité du moule.

Ainsi, grâce au dispositif de l'invention, une pellicule de format déterminé, et une seule, peut être prélevée du magasin et amenée en position de travail, en synchronisme avec l'ouverture et la fermeture du moule.

## REVENDICATIONS

1 - Dispositif de transport d'une pellicule de format déterminé, destinée par exemple à servir de revêtement au moins partiel d'un objet moulé, entre une position de prélèvement dans un magasin contenant une pluralité desdites pellicules et une position de travail entre deux pièces, mobiles l'une par rapport à l'autre suivant une première direction, d'une machine, telle que par exemple un moule,
caractérisé en ce qu'il comporte des moyens de prélèvement (6) d'une pellicule (2) dans ledit magasin (3) susceptibles de se déplacer, selon un mouvement lié à celui desdites pièces (4,5), suivant une seconde direction (Y-Y') orthogonale à ladite première direction (X-X') entre ladite position de prélèvement et ladite position de travail, et en ce que des moyens d'entraînement (18) sont associés audit magasin (3) pour animer ce dernier, indépendamment desdites pièces (4,5) mais en synchronisme avec celles-ci, d'un mouvement alternatif parallèle à ladite première direction (X-X'), de façon à amener la pellicule extrême contenue dans ledit magasin au contact desdits moyens de prélèvement et, grâce également au mouvement alternatif du magasin, à déramer lesdites pellicules.

2 - Dispositif selon la revendication 1, caractérisé en ce que les moyens de prélèvement (6) sont entraînés par un système de deux crémaillères (8,9) croisées engrenées l'une avec l'autre, dont l'une (8), parallèle à ladite première direction (X-X'), est solidaire d'une première pièce (5) de ladite machine (21) et l'autre (9), parallèle à ladite seconde direction (Y-Y') et qui peut coulisser dans un guide (12) solidaire de la seconde pièce (4) de la machine (21), est solidaire desdits moyens de prélèvement (6).

3 - Dispositif selon la revendication 1 ou la revendication 2,
caractérisé en ce que les moyens de prélèvement (6)
comportent au moins une buse de dépression (7).

4 - Dispositif selon l'une quelconque des revendications
1 à 3,
caractérisé en ce que les moyens d'entraînement du
magasin, monté sur un support mobile (19), comprennent au
moins un vérin (18).

5 - Dispositif selon l'une quelconque des revendications
1 à 4,
caractérisé en ce que les moyens de prélèvement (6) sont
associés à des moyens permettant de les déplacer selon la
direction (X-X') de façon à pouvoir déposer la pellicule
(2) exactement au fond de la cavité (22) du moule (21).

Office européen
des brevets

**RAPPORT DE RECHERCHE EUROPEENNE**

Numero de la demande

EP 86 40 1885

| Catégorie | Citation du document avec indication. en cas de besoin. des parties pertinentes | Revendication concernée | CLASSEMENT DE LA DEMANDE (Int. Cl.4) |
|-----------|---------------------------------------------------------------------------------|-------------------------|--------------------------------------|
| X | FR-A-2 541 174 (SERTA)<br>* Page 8, ligne 14 - page 9, ligne 12; figures 3,4 * | 1,3-5 | B 65 C 9/14<br>B 29 C 49/24<br>B 29 C 51/16<br>B 29 C 45/14<br>B 29 C 31/00 |
| Y | | 2 | |
| | --- | | |
| Y | US-A-4 204 824 (J.R. PARADIS)<br>* En entier * | 2 | |
| | --- | | |
| A | FR-A- 786 556 (GEBR. SCHÄFFLER)<br>* Page 3, lignes 38-52; figures 1,5,6 * | 1 | |
| | --- | | |
| A | US-A-4 368 018 (H. REES et al.)<br>* Colonne 3, ligne 17 - colonne 4, ligne 68; figures 1-4 * | 2,3,5 | DOMAINES TECHNIQUES RECHERCHES (Int. Cl.4) |
| | --- | | B 29 C |
| A | DE-A-2 657 753 (KAHA KUNSTSTOFFWERK) | | |
| | --- | | |
| A | FR-A-1 593 056 (CONDUCO) | | |
| | ----- | | |

Le présent rapport de recherche a été établi pour toutes les revendications

| Lieu de la recherche | Date d'achèvement de la recherche | Examinateur |
|----------------------|-----------------------------------|-------------|
| LA HAYE | 26-06-1987 | SZAMOCKI G.J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82